# EUROPEAN PATENT APPLICATION

(11) **EP 4 621 872 A1**
(43) Date of publication of application: **24.09.2025**
(21) Application number: 23891741.3
(22) Date of filing: 03.07.2023
(51) Int. Cl.: H01M 4/36, H01M 4/48, H01M 4/587, H01M 4/62, H01M 4/134, H01M 4/1395, H01M 10/052, H01M 4/02

(54) **NEGATIVE ELECTRODE COMPOSITION FOR LITHIUM SECONDARY BATTERY AND LITHIUM SECONDARY BATTERY MANUFACTURED USING SAME**

(30) Priority: 16.11.2022 KR 20220153888
(71) Applicant: SK On Co., Ltd., Seoul 03161 (KR)
(72) Inventor: MOON, Joon Hyung, Daejeon 34124 (KR); KIM, Nak Won, Daejeon 34124 (KR); PARK, Eun Jun, Daejeon 34124 (KR); CHUNG, Ju Ho, Daejeon 34124 (KR)
(74) Representative: Stolmár & Partner Patentanwälte PartG mbB
(86) International application number: PCT/KR2023/009341
(87) International publication number: WO 2024/106667

(57) **Abstract**

An anode composition for a lithium secondary battery of the embodiments of the present invention includes metal-doped silicon oxide (SiOx, 0<x<2) particles and an additive including aluminum hydroxide. Accordingly, the gas generation amount is reduced, thereby improving the cycle life and capacity of the secondary battery.

## Description

### [Technical Field]

The present invention relates to a composition for a negative electrode ("anode") of a lithium secondary battery and a lithium secondary battery including the same, and more specifically, to an anode composition for a lithium secondary battery including heterogeneous materials and a lithium secondary battery manufactured therefrom.

### [Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

Recently, as the application scope of lithium secondary batteries continues to expand, development for a lithium secondary battery having a higher capacity and output is progressing. For example, high-capacity silicon oxide (SiOₓ) can be used as an anode active material. However, silicon may generate hydrogen gas when exposed to hydroxide ions in an aqueous slurry. Therefore, this may deteriorate the stability of the slurry.

In addition, when a metal is doped into silicon oxide (SiOₓ), the viscosity of the anode slurry may decrease during manufacturing, thereby causing difficulties in electrode preparation due to gas generation, and resulting in a decrease in the output characteristics of the battery. For example, Korean Patent Registration Nos. 10-1591698 and 10-1728171 disclose an anode active material in which a metal (lithium) is doped into silicon oxide, but do not disclose any means of preventing gas generation.

### [Summary of Invention]

### [Problems to be Solved by Invention]

An object of the present invention is to provide an anode composition for a lithium secondary battery having excellent output characteristics and capacity efficiency.

Another object of the present invention is to provide an anode prepared using the composition.

In addition, another object of the present invention is to provide a lithium secondary battery including an anode prepared using the composition.

### [Means for Solving Problems]

An anode composition for a lithium secondary battery according to exemplary embodiments includes: metal-doped silicon oxide (SiOₓ, 0<x<2) particles; and an additive including aluminum hydroxide.

In some embodiments, the metal doped into the silicon oxide (SiOₓ, 0<x<2) particles may include at least one of lithium, magnesium and calcium.

In some embodiments, a ratio of a total weight of aluminum to a total weight of silicon may be 0.002 to 0.06.

In some embodiments, a content of the additive may be 0.5 to 5.0% by weight based on a total weight of the silicon oxide (SiOₓ, 0<x<2) particles.

In some embodiments, a content of the silicon oxide (SiOₓ, 0<x<2) particles may be 3 to 40% by weight based on a total weight of the composition.

In some embodiments, the anode composition for a lithium secondary battery may further include a graphite-based active material.

In some embodiments, a ratio of a total weight of the silicon oxide (SiOₓ, 0<x<2) particles and the additive to a content of the graphite-based active material may be 0.03 to 0.45.

In some embodiments, the anode composition for a lithium secondary battery may further include a binder.

In some embodiments, a content of the additive may be 0.015 to 2% by weight based on the total weight of the composition.

In some embodiments, the binder may include at least one of an acrylic binder and styrene-butadiene rubber (SBR).

In some embodiments, the anode composition for a lithium secondary battery may further include a conductive material and a thickener.

An anode for a lithium secondary battery according to exemplary embodiments includes: a current collector; and an anode active material layer disposed on the current collector, wherein the anode active material layer includes metal-doped silicon oxide (sioₓ, 0<x<2) particles and aluminum hydroxide.

In some embodiments, a ratio of a total weight of aluminum to a total weight of silicon the anode for a lithium secondary battery may be 0.002 to 0.06.

A lithium secondary battery according to exemplary embodiments includes: a cathode; and the anode for a lithium secondary battery disposed to face the cathode.

A method for preparing an anode composition for a lithium secondary battery according to exemplary embodiments includes: preparing metal-doped silicon oxide (SiOₓ, 0<x<2) particles; mixing an additive including aluminum hydroxide with the metal-doped silicon oxide (SiOₓ, 0<x<2) particles to form a preliminary composition; and mixing a binder with the preliminary composition.

### [Advantageous effects]

The anode composition for a lithium secondary battery according to exemplary embodiments may include an additive including aluminum hydroxide. Therefore, hydroxide ions may be removed by the additive, thereby inhibiting the reaction between silicon and hydroxide ions, and suppressing the generation of hydrogen gas. As a result, the cycle life and capacity of the secondary battery may be improved.

In the method for preparing an anode composition according to some embodiments, the formation of a preliminary composition by mixing the additive may be performed before adding and mixing a binder. Accordingly, the anode active material may include the additive before contact with water, thereby blocking hydroxide ions generated when the anode active material comes into contact with water from reacting with silicon. As a result, deterioration in the capacity characteristics of the secondary battery may be prevented.

### [Brief Description of Drawings]

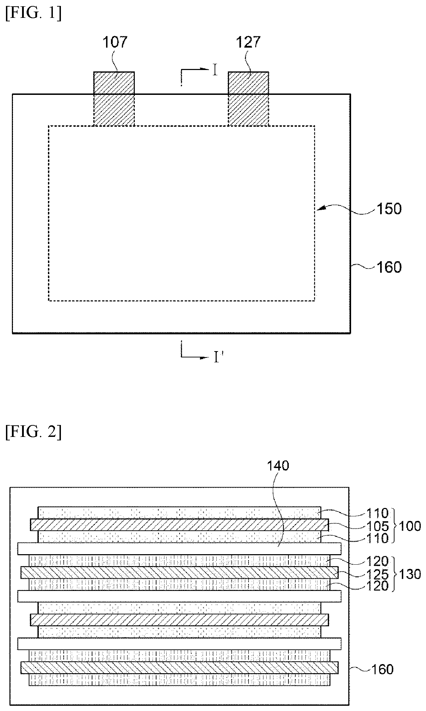

FIGS. 1 and 2 are schematic plan and cross-sectional views of a lithium secondary battery according to exemplary embodiments, respectively.

### [Mode for Carrying out Invention]

According to embodiments of the present invention, there is provided an anode composition for a lithium secondary battery, which includes metal-doped silicon oxide (SiOₓ, 0<x<2) particles and an additive including aluminum hydroxide. In addition, embodiments of the present invention provide an anode prepared from the anode composition and a lithium secondary battery including the anode.

Hereinafter, the embodiments of the present invention will be described in detail with reference to the accompanying drawings. However, since the drawings attached to the present disclosure are only given for illustrating one of several preferred embodiments of the present invention to easily understand the technical spirit of the present invention with the above-described invention, it should not be construed as limited to such a description illustrated in the drawings.

### <Composition for anode of lithium secondary battery>

The anode composition for a lithium secondary battery according to exemplary embodiments (hereinafter, also be abbreviated as the anode composition) may be provided in the form of a slurry, and may include an anode active material. For example, the anode composition may further include a binder. For example, the anode composition may further include a conductive material and a thickener.

The anode active material may be silicon oxide (SiOx, 0<x<2) particles. In some embodiments, the anode active material may further include a carbon-based active material. For example, the carbon-based active material may be a graphite-based active material such as natural graphite or artificial graphite.

In exemplary embodiments, the silicon oxide (SiOₓ, 0<x<2) particles may be doped with a metal to improve the initial efficiency of the lithium secondary battery.

For example, when a metal component is doped into the silicon oxide (SiOₓ, 0<x<2) particles, the metal may bind to the silicon oxide (SiOₓ, 0<x<2) particles and form a metal silicate region on the surface of the silicon oxide particles through an irreversible reaction.

Accordingly, for example, the initial irreversible reaction of the silicon oxide particles may be reduced during the intercalation and deintercalation processes of lithium ions that occur during battery charging and discharging. Therefore, the initial efficiency of the lithium secondary battery may be improved.

In some embodiments, the metal doped into the silicon oxide (SiOₓ, 0<x<2) particles may include at least one of lithium (Li), magnesium (Mg), calcium (Ca) and aluminum (Al). In some preferred embodiments, the metal may include at least one of lithium (Li), magnesium (Mg) and calcium (Ca).

For example, the silicon oxide (SiOₓ, 0<x<2) particles containing a lithium compound may be silicon oxide (SiOₓ, 0<x<2) particles including lithium silicate. The lithium silicate may be present in at least a portion of the silicon oxide (SiOₓ, 0<x<2) particles, and for example, may be present inside and/or on the surface of the silicon oxide (SiOₓ, 0<x<2) particles. In one embodiment, the lithium silicate may include Li₂SiO₃, Li₂Si₂O₅, Li₄SiO₄, Li₄Si₃O₈, etc.

For example, a metal hydroxide (e.g., LiOH or Mg(OH)₂) may be formed on the surface of the silicon oxide (SiOₓ, 0<x<2) particles. Accordingly, the metal hydroxide may react with atmospheric moisture or water in the anode slurry to generate hydroxide ions (OH⁻), thereby increasing the pH of the anode composition.

Therefore, since the thickener shrinks and the viscosity of the anode composition decreases, the processability and productivity during electrode fabrication may be reduced. In addition, as the metal hydroxide on the surface of the silicon oxide (SiOₓ, 0<x<2) particles is removed, excellent battery efficiency resulting from metal doping may not be realized.

For example, as shown in the following scheme, the hydroxide ions (OH⁻) may react with silicon to generate hydrogen gas (H₂ gas).

[Scheme] Si(s) + 2OH⁻(aq) + 2H₂O(l) → Si(OH)₄(ag) + H₂(g) → SiO₂(OH)₂²⁻ (ag)+ 2H₂ (g)

Therefore, when hydrogen gas is generated and bubbles are formed in the slurry, it becomes difficult to uniformly coat the entire current collector, and the reversible silicon may be converted into the irreversible silicon oxide (e.g., SiO₂), which may degrade the capacity characteristics of the anode active material.

In exemplary embodiments, the anode composition for a lithium secondary battery may include an additive including aluminum hydroxide.

For example, the additive may react with metal hydroxides such as LiOH, or react with or adsorb hydroxide ions dissolved in water, thereby reducing the concentration of hydroxide ions. Accordingly, the reaction between silicon and hydroxide ions may be reduced, and the generation of hydrogen gas may be suppressed. Therefore, a decrease in processability and productivity during electrode fabrication may be prevented, and the cycle life and capacity of the lithium secondary battery may be improved.

In some embodiments, a content of the additive may be 0.5 to 5.0% by weight ("wt%") based on the total weight of the silicon oxide (SiOₓ, 0<x<2) particles, for example, 0.4 to 6.0 wt%, 0.4 to 4.0 wt%, 0.4 to 2.5 wt%, 0.5 to 6.0 wt%, 0.5 to 4.0 wt%, 0.5 to 2.5 wt%. Within the above range, hydroxide ions are removed by the aluminum compound, thereby suppressing the generation of hydrogen gas, and improving the capacity, cycle life, and electrode adhesion strength of the lithium secondary battery.

If the content of the additive is less than 0.5 wt%, hydrogen gas may be generated and the capacity and electrode adhesion strength may be reduced, and if it exceeds 5.0 wt%, the capacity and cycle life of the lithium secondary battery may be reduced due to the excessive amount of the aluminum compound.

In a preferred embodiment, the anode composition for a lithium secondary battery may include aluminum hydroxide, and a content of the aluminum hydroxide may be 0.5 to 5.0 wt% based on the total weight of the silicon oxide (SiOₓ, 0<x<2) particles.

In some embodiments, a ratio of the total weight of aluminum to the total weight of silicon may be 0.002 to 0.06, for example, 0.002 to 0.04, 0.002 to 0.02, or 0.002 to 0.01. Within the above range, the adhesion strength of the anode active material may be ensured, while reducing the generation of hydrogen gas, thereby improving the cycle life and capacity of the lithium secondary battery.

In some embodiments, the content of the silicon oxide (SiOₓ, 0<x<2) particles may be 3 to 40 wt% based on the total weight of the composition. For example, the content may be 5 to 35 wt%, 7 to 30 wt%, 10 to 25 wt%, or 5 to 25 wt%. Within the above range, the initial efficiency and capacity of the lithium secondary battery may be improved.

In some embodiments, the content of the additive may be 0.015 to 2 wt% based on the total weight of the composition. For example, the content may be 0.02 to 1.8 wt%, 0.5 to 1.5 wt%, 0.8 to 1.3 wt%, or 0.1 to 1 wt%. Within the above range, the capacity, cycle life, and electrode adhesion strength of the lithium secondary battery may be improved.

In some embodiments, the composition may further include a graphite-based active material. For example, the graphite-based active material may be natural graphite, artificial graphite, etc.

In some embodiments, the ratio of the total weight of the silicon oxide (SiOₓ, 0<x<2) particles and the additive to the content of the graphite-based active material may be 0.03 to 0.45. For example, the ratio may be 0.05 to 0.40, 0.10 to 0.35, 0.15 to 0.30, or 0.20 to 0.28. Within the above range, the capacity and cycle life of the lithium secondary battery may be improved while maintaining chemical stability.

In some embodiments, the anode composition may include a solvent and may further include a binder.

For example, the solvent may be a non-aqueous solvent. As the non-aqueous solvent, for example, N-methyl-2-pyrrolidone (NMP), dimethylformamide, dimethylacetamide, N,N-dimethylaminopropylamine, ethylene oxide, tetrahydrofuran, etc. may be used.

For example, the solvent may be an aqueous solvent such as water, an aqueous solution of hydrochloric acid, or an aqueous solution of sodium hydroxide.

For example, the binder may include at least one of an organic binder such as polyacrylonitrile, polymethylmethacrylate, or an aqueous binder such as styrene-butadiene rubber (SBR).

In some embodiments, the anode composition may further include a conductive material and a thickener.

For example, the conductive material may include a carbon-based conductive material such as graphite, carbon black, graphene, carbon nanotubes (CNTs), and/or a metal-based conductive material including tin, tin oxide, titanium oxide, or a perovskite material such as LaSrCoO₃, and LaSrMnO₃.

For example, the thickener may include carboxymethyl cellulose (CMC).

Hereinafter, a method for preparing the above-described anode composition for a lithium secondary battery will be described.

In exemplary embodiments, metal-doped silicon oxide (SiOₓ, 0<x<2) particles having a metal silicate region on the surface may be prepared by doping a metal into silicon oxide (SiOₓ, 0<x<2) particles.

For example, an additive including aluminum hydroxide may be directly mixed with the prepared metal-doped silicon oxide (SiOₓ, 0<x<2) particles to form a preliminary composition.

Accordingly, the additive may be mixed before the metal hydroxide present on the surface of the metal-doped silicon oxide (SiOₓ, 0<x<2) particles reacts with water. Thereafter, it is possible to block hydroxide ions generated from the reaction between the metal hydroxide and water from reacting with the silicon in the metal-doped silicon oxide (SiOₓ, 0<x<2) particles. Accordingly, the generation of hydrogen gas resulting from the reaction may be suppressed, and a decrease in the capacity characteristics of the battery may be prevented.

In some embodiments, a binder may be mixed with the preliminary composition. For example, an anode composition may be obtained by mixing a solvent and a binder with the preliminary composition. For example, a solvent, a binder, a conductive material and a thickener may be mixed with the preliminary composition. The materials of the solvent, the binder, the conductive material and the thickener may be as described above.

In some embodiments, the above-described method for preparing an anode composition for a lithium secondary battery may not include an acid washing process. Accordingly, the generation of hydrogen gas in the anode composition may be suppressed to improve the cycle life and capacity of the battery, while reducing processing costs and implementing an environmentally friendly process, and preventing a decrease in initial capacity efficiency due to the removal of the doped metal.

### <Lithium secondary battery>

FIGS. 1 and 2 are schematic plan and cross-sectional views illustrating a lithium secondary battery according to exemplary embodiments, respectively.

Referring to FIGS. 1 and 2, the lithium secondary battery may include an electrode assembly including a cathode 100, an anode 130, and a separation membrane 140 interposed between the cathode and the anode. The electrode assembly may be housed in a case 160 together with an electrolyte to be impregnated.

The cathode 100 may include a cathode active material layer 110 formed by applying a slurry containing the cathode active material to a cathode current collector 105.

For the cathode current collector 105, aluminum or an aluminum alloy may be used, but it is not limited thereto, and stainless steel, nickel, aluminum, titanium or an alloy thereof; and aluminum or stainless steel whose surface is subjected to surface treatment with carbon, nickel, titanium, or silver, etc. may be used.

The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Formula 1 below.

[Formula 1] LiₓNi_{1-y}M_{y}O_{2+z}

In Formula 1, x may be in a range of 0.9≤x≤1.1, y may be in a range of 0≤y≤0.7, and z may be in a range of -0.1≤z≤0.1. M may denote one or more elements selected from Na, Mg, Ca, Y, Ti, Zr, Hf, V, Nb, Ta, Cr, Mo, W, Mn, Co, Fe, Cu, Ag, Zn, B, Al, Ga, C, Si or Sn.

In some embodiments, a molar ratio or concentration (1-y) of Ni in Formula 1 may be 0.8 or more, and in a preferred embodiment, may exceed 0.8.

A slurry may be prepared by mixing the cathode active material with a binder, a conductive material and/or a dispersant in a solvent, followed by stirring the same. The slurry may be coated on the cathode current collector 105, followed by compression and drying to prepare the cathode 100.

As the solvent, a non-aqueous solvent may be used. For example, as the non-aqueous solvent, N-methyl-2-pyrrolidone (NMP), dimethylformamide, dimethylacetamide, N,N-dimethylaminopropylamine, ethylene oxide, tetrahydrofuran, etc. may be used, but it is not limited thereto.

As the binder, any material used in the art may be used without particular limitation, and for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR) may be used together with a thickener such as carboxymethyl cellulose (CMC).

Preferably, a PVDF-based binder may be used as a cathode binder. In this case, an amount of the binder for forming the cathode active material layer may be reduced and an amount of cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as LaSrCoO₃, and LaSrMnO₃.

In some embodiments, the anode 130 may include an anode current collector 125 and an anode active material layer 120 formed by coating at least one surface of the anode current collector 125 with the anode composition, followed by compression and drying.

In some embodiments, the anode 130 includes the anode current collector 125 and the anode active material layer 120 disposed on the anode current collector 125, and the anode active material layer 120 may include metal-doped silicon oxide (SiOₓ, 0<x<2) particles and aluminum hydroxide.

Since the anode active material layer 120 is formed from the above-described anode composition, it may include components of the composition. The description of the metal-doped silicon oxide (SiOₓ, 0<x<2) particles and aluminum hydroxide is the same as that of the anode composition of a lithium secondary battery.

In some embodiments, the ratio of the total weight of aluminum to the total weight of silicon in the anode 130 may be 0.002 to 0.06. For example, the ratio may be 0.002 to 0.04, 0.002 to 0.02, or 0.002 to 0.01. Within the above range, the cycle life and capacity of the lithium secondary battery may be improved.

For example, for the anode current collector 125, any metal may be used as long as it has high conductivity and allows easy adhesion of the anode composition, provided that it is non-reactive within the voltage range of the battery. For example, copper or a copper alloy, stainless steel, nickel, copper, titanium or an alloy thereof, copper or stainless steel having a surface treated with carbon, nickel, titanium, or silver may be used.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the process, for example. Accordingly, the effects of improvement of capacity and output enhancement due to the adoption of the above-described silicon-based anode active material may be more easily implemented.

According to exemplary embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, etc. the separation membrane 140.

The electrode assembly 150 may be housed in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

As illustrated in FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 170 to form electrode leads (a cathode lead 107 and an anode lead 127) that extend or are exposed to the outside of the outer case 170.

The lithium secondary battery may be manufactured, for example, in a cylindrical shape using a can, a prismatic shape, a pouch shape or a coin shape.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

### Example 1

### Preparation of anode

Metal-doped silicon oxide (SiOₓ, 0<x<2) particles were prepared by doping lithium (Li) into the synthesized silicon oxide (SiOₓ, 0<x<2) particles.

Aluminum hydroxide (Al(OH)₃) was added to the metal-doped silicon oxide (SiOₓ, 0<x<2) particles in an amount of 0.5 wt% based on the total weight of the metal-doped silicon oxide (SiOₓ, 0<x<2) particles.

An anode composition was obtained by mixing 20 wt% of a mixture of aluminum hydroxide (Al(OH)₃) and the metal-doped silicon oxide (SiOₓ, 0<x<2) particles, 75.5 wt% of artificial graphite, 1 wt% of CNT as a flake-type conductive material, 2 wt% of styrene-butadiene rubber (SBR) as a binder, and 1.5 wt% of carboxymethyl cellulose (CMC) as a thickener.

The anode composition was coated on a copper substrate, dried, and then pressed to prepare an anode.

### Manufacture of lithium (Li) half-cell

A lithium secondary battery including the anode prepared by the above-described method and using lithium metal as a counter electrode (cathode) was manufactured.

A lithium coin half-cell was configured by interposing a separation membrane (polyethylene, thickness: 20 µm) between the prepared anode and lithium metal (thickness: 2 mm).

A combination of lithium metal/separation membrane/anode was placed in a coin cell plate, and an electrolyte was injected, and then a cap was covered and clamped. As the electrolyte, a solution prepared by dissolving 1M LiPF₆ in a mixed solvent of EC/FEC/EMC/DEC (20/10/20/50; volume ratio) was used. The manufactured lithium half-cell was impregnated for 12 hours or more after clamping, and then three charging and discharging cycles were performed at 0.1C (charging conditions: CC-CV 0.1C 0.01V 0.01C cut-off, discharging conditions: CC 0.1C 1.5V cut-off).

### Example 2

An anode and a lithium secondary battery including the anode were manufactured in the same manner as in Example 1, except that aluminum hydroxide (Al(OH)₃) was mixed with the metal-doped silicon oxide (SiOₓ, 0<x<2) particles in an amount of 1.0 wt% based on the total weight of the metal-doped silicon oxide (SiOₓ, 0<x<2) particles.

### Example 3

An anode and a lithium secondary battery including the anode were manufactured in the same manner as in Example 1, except that aluminum hydroxide (Al(OH)₃) was mixed with the metal-doped silicon oxide (SiOₓ, 0<x<2) particles in an amount of 3.0 wt% based on the total weight of the metal-doped silicon oxide (SiOₓ, 0<x<2) particles.

### Example 4

An anode and a lithium secondary battery including the anode were manufactured in the same manner as in Example 1, except that aluminum hydroxide (Al(OH)₃) was mixed with the metal-doped silicon oxide (SiOₓ, 0<x<2) particles in an amount of 5.0 wt% based on the total weight of the metal-doped silicon oxide (SiOₓ, 0<x<2) particles.

### Comparative Example 1

An anode and a lithium secondary battery including the anode were manufactured in the same manner as in Example 1, except that 20 wt% of metal-doped silicon oxide (SiOₓ, 0<x<2) particles were used without the use of aluminum hydroxide (Al(OH)₃).

### Comparative Example 2

An anode and a lithium secondary battery including the anode were manufactured in the same manner as in Example 1, except that aluminum hydroxide (Al(OH)₃) was mixed with the metal-doped silicon oxide (SiOₓ, 0<x<2) particles in an amount of 0.3 wt% based on the total weight of the metal-doped silicon oxide (SiOₓ, 0<x<2) particles.

### Comparative Example 3

An anode and a lithium secondary battery including the anode were manufactured in the same manner as in Example 1, except that aluminum hydroxide (Al(OH)₃) was mixed with the metal-doped silicon oxide (SiOₓ, 0<x<2) particles in an amount of 10.0 wt% based on the total weight of the metal-doped silicon oxide (SiOₓ, 0<x<2) particles.

### Comparative Example 4

An anode and a lithium secondary battery including the anode were manufactured in the same manner as in Example 1, except that aluminum oxide (Al₂O₃) was mixed with the metal-doped silicon oxide (SiOₓ, 0<x<2) particles instead of aluminum hydroxide (Al(OH)₃) in an amount of 0.5 wt% based on the total weight of the metal-doped silicon oxide (SiOₓ, 0<x<2) particles.

### Comparative Example 5

An anode and a lithium secondary battery including the anode were manufactured in the same manner as in Example 1, except that aluminum phosphate (AlPO₄) was mixed with the metal-doped silicon oxide (SiOₓ, 0<x<2) particles instead of aluminum hydroxide (Al(OH)₃) in an amount of 0.5 wt% based on the total weight of the metal-doped silicon oxide (SiOₓ, 0<x<2) particles.

### Comparative Example 6

An anode and a lithium secondary battery including the anode were manufactured in the same manner as in Example 1, except that aluminum silicate (Al₂O(SiO₄)) was mixed with the metal-doped silicon oxide (SiOₓ, 0<x<2) particles instead of aluminum hydroxide (Al(OH)₃) in an amount of 0.5 wt% based on the total weight of the metal-doped silicon oxide (SiOₓ, 0<x<2) particles.

### Experimental Example

### (1) Evaluation of silicon and aluminum content in anode composition

The contents of the silicon and aluminum elements in the anode compositions prepared according to the examples and comparative examples were measured by inductively coupled plasma (ICP) analysis.

### (2) Measurement of initial charge and discharge capacities and calculation of initial capacity efficiency

The lithium secondary batteries manufactured according to the above-described examples and comparative examples were charged (CC-CV 0.1C 0.01V 0.01C cut-off) in a chamber at 25°C, and the battery capacity (initial charge capacity) was measured. Then, the batteries were discharged (CC 0.1C 1.5V cut-off), and the battery capacity (initial discharge capacity) was measured.

The initial capacity efficiency was calculated by dividing the measured initial discharge capacity by the measured initial charge capacity and multiplying the result by 100.

### (3) Evaluation of capacity retention rate

The lithium half-cells manufactured according to the above-described examples and comparative examples were charged at a constant current of 0.1C at 25°C until the voltage reached 0.01V (vs. Li). Subsequently, the cells were charged at a constant voltage while maintaining 0.01V with cut-off at a current of 0.01C, and then discharged at a constant current of 0.1C rate until the voltage reached 1.5V (vs. Li). The charging and discharging process was defined as one cycle.

One additional charging and discharging cycle was performed in the same manner as described above. Thereafter, 48 additional cycles were performed in the same manner as described above, except that the applied current was changed to 0.5C, and a 10-minute rest period was placed between each cycle.

The capacity retention rate was calculated by dividing the discharge capacity after a total of 50 cycles by the discharge capacity after the first cycle and then multiplying the result by 100.

### (4) Evaluation of adhesion strength

For the anodes prepared according to the above-described examples and comparative examples, the adhesion strength of the anode active material was measured. Specifically, the force required to peel off the anode attached to a tape at an angle of 90° was measured using IMADA Z Link 3.1.

### (5) Evaluation of gas generation amount

The anode compositions manufactured according to the examples and comparative examples were injected in predetermined amounts into gas-tight syringes, and the inlets were sealed and stored at room temperature for 1 day. The volume of the anode composition before and after storage was measured, and the slurry gas generation rate was calculated by Equation 1 below. Slurry gas generation rate = (Slurry volume after 1 day - Initial slurry volume) / (Initial slurry volume)

The evaluation results are shown in Tables 1 and 2.

**[TABLE 1]**

| Classification | Types of additive | Amount of additive (wt%) | Al/Si elemental weight ratio |
|---|---|---|---|
| Example 1 | Aluminum hydroxide (Al(OH)₃) | 0.5 | 0.0024 |
| Example 2 | Aluminum hydroxide (Al(OH)₃) | 1.0 | 0.0062 |
| Example 3 | Aluminum hydroxide (Al(OH)₃) | 3.0 | 0.0185 |
| Example 4 | Aluminum hydroxide (Al(OH)₃) | 5.0 | 0.0342 |
| Comparative Example 1 | Aluminum hydroxide (Al(OH)₃) | 0 | 0 |
| Comparative Example 2 | Aluminum hydroxide (Al(OH)₃) | 0.3 | 0.0015 |
| Comparative Example 3 | Aluminum hydroxide (Al(OH)₃) | 10.0 | 0.0626 |
| Comparative Example 4 | Aluminum oxide (Al₂O₃) | 0.5 | 0.0036 |
| Comparative Example 5 | Aluminum phosphate (AlPO₄) | 0.5 | 0.0015 |
| Comparative Example 6 | Aluminum silicate (Al₂O(SiO₄)) | 0.5 | 0.0021 |

**[TABLE 2]**

| Classification | Initial charge capacity (mAh/g) | Initial discharge capacity (mAh/g) | Initial capacity efficiency (%) | Capacity retention rate (%) | Adhesion strength (N) | Gas generation rate (%) |
|---|---|---|---|---|---|---|
| Example 1 | 607 | 563 | 92.9 | 96.5 | 0.54 | 0 |
| Example 2 | 602 | 560 | 93.0 | 95.7 | 0.56 | 0 |
| Example 3 | 600 | 558 | 93.0 | 95.8 | 0.55 | 0 |
| Example 4 | 600 | 557 | 92.9 | 96.4 | 0.51 | 0 |
| Comparative Example 1 | 603 | 549 | 91.1 | 83.1 | 0.29 | 100 |
| Comparative Example 2 | 601 | 550 | 91.5 | 90.2 | 0.40 | 40 |
| Comparative Example 3 | 590 | 548 | 92.9 | 79.4 | 0.24 | 0 |
| Comparative Example 4 | 600 | 552 | 92.0 | 84.2 | 0.36 | 20 |
| Comparative Example 5 | 599 | 553 | 92.3 | 82.3 | 0.35 | 10 |
| Comparative Example 6 | 602 | 548 | 91.0 | 77.1 | 0.30 | 80 |

Referring to Table 2, the secondary batteries manufactured using the anode compositions of the examples exhibited excellent adhesion strength of the anode active material while suppressing gas generation, and the capacity and cycle life of the secondary batteries were improved compared to the comparative examples.

In the case of Comparative Examples 1 and 2, which did not contain aluminum hydroxide or contained it in small amounts, hydrogen gas was generated, resulting in deterioration of the capacity of the secondary battery and the electrode adhesion strength.

In the case of Comparative Example 3, which contained an excessive amount of aluminum hydroxide, the capacity of the secondary battery was low, and the electrode adhesion strength was reduced due to the increased precipitation caused by the reaction between metal hydroxides such as LiOH and aluminum hydroxide.

In the case of Comparative Examples 4 to 6, in which other aluminum compounds were used instead of aluminum hydroxide, aluminum oxide, aluminum phosphate, and aluminum silicate had relatively low reactivity with metal hydroxides such as LiOH as compared with aluminum hydroxide, leading to a reduced hydrogen gas suppression effect.

## Claims

1. An anode composition for a lithium secondary battery comprising:
metal-doped silicon oxide (SiOₓ, 0<x<2) particles; and
an additive comprising aluminum hydroxide.

2. The anode composition for a lithium secondary battery according to claim 1, wherein the metal doped into the silicon oxide (SiOₓ, 0<x<2) particles comprises at least one of lithium, magnesium and calcium.

3. The anode composition for a lithium secondary battery according to claim 1, wherein a ratio of a total weight of aluminum to a total weight of silicon is 0.002 to 0.06.

4. The anode composition for a lithium secondary battery according to claim 1, wherein a content of the additive is 0.5 to 5.0% by weight based on a total weight of the silicon oxide (SiOₓ, 0<x<2) particles.

5. The anode composition for a lithium secondary battery according to claim 1, wherein a content of the silicon oxide (SiOₓ, 0<x<2) particles is 3 to 40% by weight based on a total weight of the composition.

6. The anode composition for a lithium secondary battery according to claim 1, further comprising a graphite-based active material.

7. The anode composition for a lithium secondary battery according to claim 6, wherein a ratio of a total weight of the silicon oxide (SiOₓ, 0<x<2) particles and the additive to a content of the graphite-based active material is 0.03 to 0.45.

8. The anode composition for a lithium secondary battery according to claim 1, further comprising a binder.

9. The anode composition for a lithium secondary battery according to claim 8, wherein a content of the additive is 0.015 to 2% by weight based on the total weight of the composition.

10. The anode composition for a lithium secondary battery according to claim 8, wherein the binder comprises at least one of an acrylic binder and styrene-butadiene rubber (SBR).

11. The anode composition for a lithium secondary battery according to claim 1, further comprising a conductive material and a thickener.

12. An anode for a lithium secondary battery comprising:
a current collector; and
an anode active material layer disposed on the current collector,
wherein the anode active material layer comprises metal-doped silicon oxide (sioₓ, 0<x<2) particles and aluminum hydroxide.

13. The anode for a lithium secondary battery according to claim 12, wherein a ratio of a total weight of aluminum to a total weight of silicon is 0.002 to 0.06.

14. A lithium secondary battery comprising:
a cathode; and
the anode for a lithium secondary battery according to claim 12 disposed to face the cathode.

15. A method for preparing an anode composition for a lithium secondary battery comprising:
preparing metal-doped silicon oxide (SiOₓ, 0<x<2) particles;
mixing an additive comprising aluminum hydroxide with the metal-doped silicon oxide (SiOₓ, 0<x<2) particles to form a preliminary composition; and
mixing a binder
